Europäisches Patentamt

European Patent Office

Office européen des brevets

(19)

(11) Veröffentlichungsnummer: **0 065 778**
A2

(12) **EUROPÄISCHE PATENTANMELDUNG**

(21) Anmeldenummer: 82104502.8

(51) Int. Cl.³: **F 03 D 3/06**

(22) Anmeldetag: 24.05.82

(30) Priorität: 27.05.81 DE 3121106

(43) Veröffentlichungstag der Anmeldung:
01.12.82 Patentblatt 82/48

(84) Benannte Vertragsstaaten:
AT BE CH FR GB IT LI NL SE

(71) Anmelder: Herter, Erich
Am Pelz, 66
D-6100 Darmstadt(DE)

(71) Anmelder: Herter, Gunnar
Am Pelz, 66
D-6100 Darmstadt(DE)

(72) Erfinder: Herter, Erich
Am Pelz, 66
D-6100 Darmstadt(DE)

(72) Erfinder: Herter, Gunnar
Am Pelz, 66
D-6100 Darmstadt(DE)

(74) Vertreter: Wolf, Günter, Dipl.Ing. et al,
Mittelweg 12 P.O.B. 180 144
D-6000 Frankfurt Main(DE)

(54) Turbine.

(57) Die Turbine, insbesondere Windturbine zur Umsetzung der Energie einer frei anströmenden Strömung besteht aus einem um eine vertikale Achse drehbaren, sich frei auf die Anströmrichtung einstellenden Rotor.

Am äußeren Ende des Rotors ist mindestens ein Strömungsfangblatt mit schlankem Strömungsprofilquerschnitt angeordnet.

Das mindestens eine am Rotor angeordnete Strömungsfangblatt (1) ist mit dem oder am Rotor derart mittels eines Führungsgetriebes deart geführt, daß es eine elliptische bzw. angenähert elliptische Umlaufbahn (2) durchläuft.

./...

FIG.1

(14 496)


## Turbine


Die Erfindung betrifft eine Turbine gemäß Oberbegriff
des Hauptanspruches. Soweit hier der allgemeine Begriff
Turbine gewählt ist, geschieht dies in Rücksicht darauf,
daß die erfindungsgemäße Turbine auch in einer Wasserströmung in entsprechender Anpassung anwendbar ist.
Der Einf-achheit halber wird aber nachfolgend auf den
bevorzugten Anwendungsbereich der Ausnutzung bzw. Umsetzung von Windenergie Bezug genommen.


Die als sogenannte Darrieus-Turbine bekannte Bauart
hat infolge Windrichtungsunabhängigkeit und geringer
Bauhöhe mechanische Vorteile. Jedoch ist der Betriebsbereich infolge kleiner Schnellaufzahlen, die bei
ca. 5-7 liegen, wesentlich kleiner als der von Axialturbinen (Growian), deren Schnellaufzahlen zwischen
8 und 13 liegen. Die Darrieus-Turbine benötigt immer
eine Anlaufhilfe, wobei vorzugsweise als Zusatzrotor
ein sogenanntes Savonius-Rad verwendet wird,

- 2 -

das der Darrieus-Turbine die notwendige Anfahrgeschwindigkeit gibt, damit sich eine aerodynamische Auftriebskraft entwickeln kann. Der Anlaufrotor braucht bei Überschreiten seiner spezifischen Eigengeschwindigkeit
Energie, da sich dann die Turbine in ein Gebläse umkehrt.

Außerdem bekannt ist eine Kombination von Staudruck- und
H-Turbine, die selbsttätig bei kleinen Windgeschwindigkeiten anläuft und später, bei Vorhandensein einer Mindestgeschwindigkeit, zur Erzeugung eines aerodynamischen Auftriebes durch eine vorzugsweise Fliehkraftsteuerung den Schwenkbereich reduziert.
Diese Bauart bringt eine große Verbesserung zur herkömmlichen Darrieus-Turbine, hat jedoch im Vergleich zu der
Axialturbine ebenfalls den Nachteil der geringen Anwendungsbreite.

Turbinen der eingangs genannten Art sind allgemein bekannt, bspw. nach DE-PS 518 733, FR-PS 921 518,
US-PS 1 139 1o3.

Bei all diesen Turbinen bemüht man sich um eine optimale Einstellung der Strömungsfangblätter zur Anströmrichtung.

-3-

Während einer Umlaufphase ist es aber praktisch unvermeidbar, daß im Gegenlaufbereich zur Windrichtung zumindest ein gewisser Bremseffekt auftritt, der Ursache dafür sein dürfte, daß für das Verhältnis Windgeschwindigkeit zu Umlaufgeschwindigkeit bisher nur Werte in der Größenordnung von etwa 1 : 6 bis maximal 1 : 8 erreicht werden konnten. Die Ursache dafür dürfte auch im wesentlichen mit darin zu suchen sein, daß die Strömungsfangblätter beim Durchlaufen einer Kreisbahn in der Kreisbahn verbleiben und, soweit Verstellungen erfolgen, auch die Vorder- und/oder Hinterkanten der Strömungsfangblätter entsprechend versetzte Kreisbahnen durchlaufen.

<->

Diese Aufgabe ist mit einer Turbine der eingangs genannten Art nach der Erfindung durch das im Kennzeichen des Anspruches 1 Erfaßte gelöst.
Vorteilhafte Weiterbildungen ergeben sich nach den Unteransprüchen.

Wesentlich ist dabei also, daß sich elliptische bzw. angenähert elliptische Umlaufbahnen ergeben, wobei in den zur Anströmrichtung im wesentlichen parallelen Bahnphasen (also gleich- und gegenläufig) die Strömungsfangblätter ebenfalls parallel zur Strömungsrichtung

- 4 -

< Der Erfindung liegt demgemäß die Aufgabe zugrunde, eine Turbine der eingangs genannten Art dahingehend zu verbessern, daß noch günstigere Umsetzungsverhältnisse bezüglich Anströmgeschwindigkeit zur Umlaufgeschwindigkeit erreichbar sind. >

- 5 -

stehen und in den beiden kürzeren , ellipsenbrennpunktnahen Bahnbereichen, aber extreme Beschleunigungsphasen
durchlaufen. Voraussetzung dabei ist natürlich, daß sich
der ganze Rotor frei so auf die Anströmrichtung einstellt,
daß die große Hauptachse der Ellipse im wesentlichen parallel zur Anströmrichtung steht, was jedoch streng genommen, nur für den Fall gilt, bei dem die Rotorarme
selbst gewissermaßen pulsierend geführt sind.
Im Falle der Kreisbahnenführung der Rotorarmenden, ist
die von den Vorder- und/oder Hinterkanten der Strömungsfangblätter durchlaufende Ellipse etwas winklig zur Anströmrichtung versetzt.


Modellversuche mit einem erfindungsgemäß ausgebildeten
Rotor haben in überraschender Weise gezeigt, daß mit
solchen Rotoren praktisch etwa das 18 - 2o-fache der
Windgeschwindigkeit und Wirkungsgrade von 9o% erzielt
werden, was mit bisherigen Horizontalrotoren überhaupt
nicht erreichbar gewesen ist.
In Verbindung mit Horizontalrotoren ist dieses ohne
weiteres auch bei großen Abmessungen der Strömungsfangblätter verkraftbar, da sich diese ohne Schwierigkeiten
am Rotor entsprechend verspannen lassen, was bei den
propellerartigen Vertikalrotoren nicht möglich ist, bei
denen die Stabilität durch entsprechend konstruktive
Maßnahmen an den propellerartigen Strömungsfangblättern

selbst gewährleistet sein muß, deren Herstellung dadurch mit einem extremen Kostenaufwand verbunden ist.

Der Rotor kann natürlich, je nach Ausbildung des Führungsgetriebes ein- oder mehrarmig ausgebildet sein, wobei bei einarmiger Ausbildung selbstverständlich auf der anderen Seite zum Drehpunkt ein Ausgleichsgewicht angeordnet werden muß.

Die erfindungsgemäße Turbine wird nachfolgend anhand der zeichnerischen Darstellung von Ausführungsbeispielen näher erläutert.

Es zeigen schematisch

Fig. 1 in Draufsicht die elliptische bzw. angenähert elliptische Umlaufbahn der Strömungsfangblätter;

Fig. 2 von der Seite eine Ausführungsform des zentrischen Führungsgetriebes für die einstellbaren Rotorarme;

Fig. 3 von der Seite ein entsprechendes Führungsgetriebe gemäß Fig. 2 mit zusätzlicher Stellmechanik für die Strömungsfangblätter;

Fig. 4 eine Draufsicht auf die Ausführungsformen nach

  Fig. 2,3;

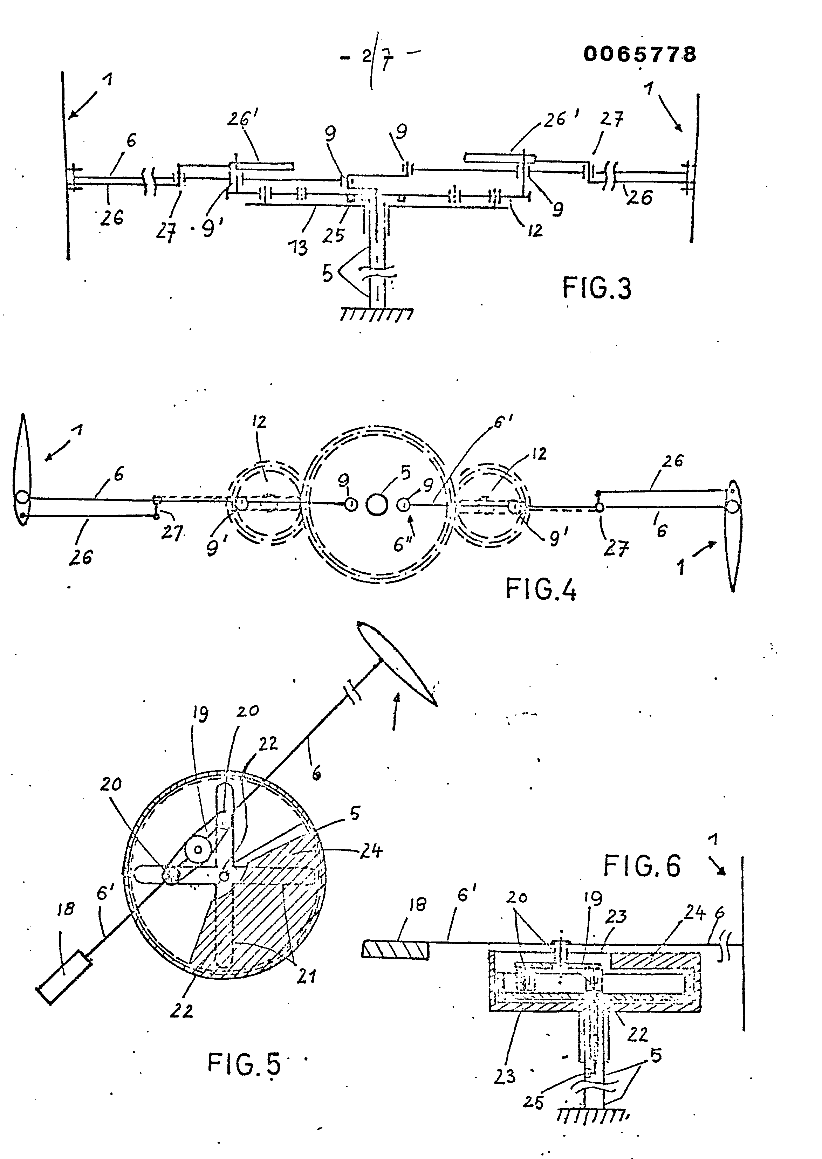

Fig. 5 in Draufsicht eine andere Ausführungsform des

  Führungsgetriebes;

Fig. 6 einen Schnitt durch das Führungsgetriebe nach

  Fig. 5;

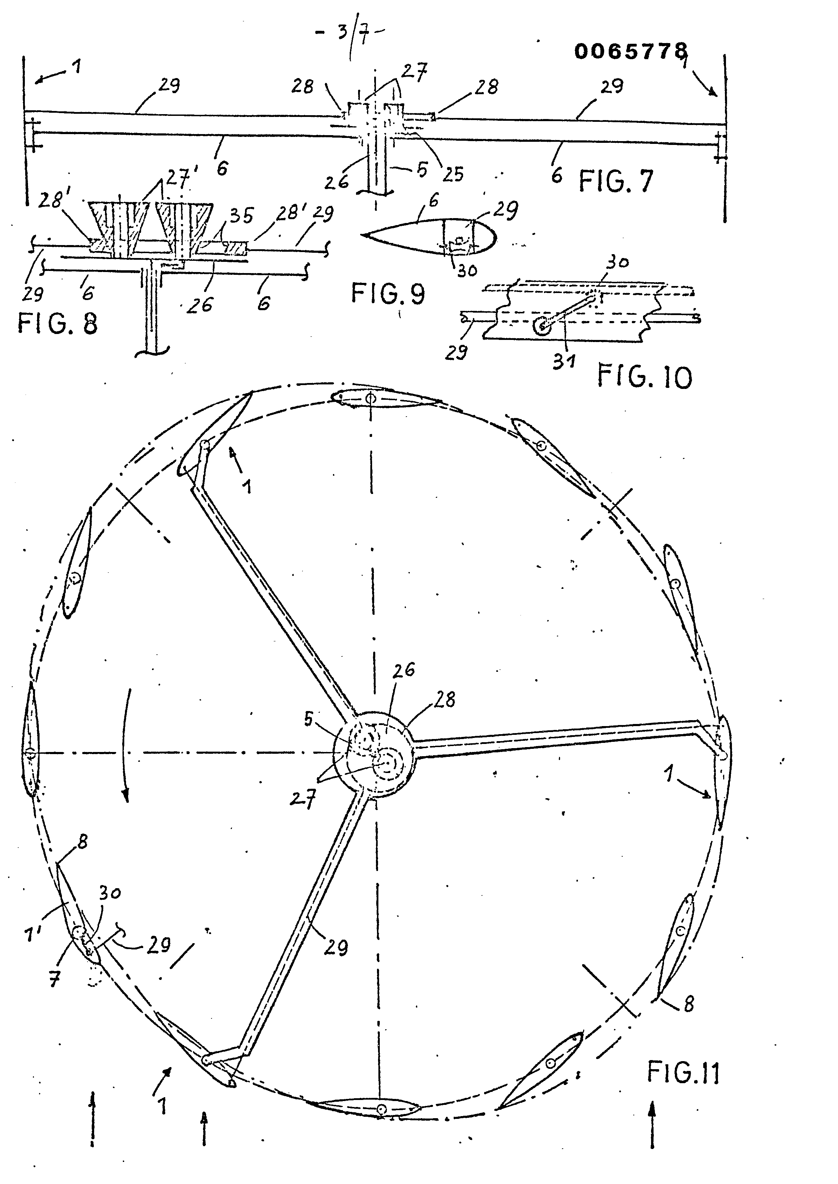

Fig. 7 von der Seite eine weitere Ausführungsform der

  Verstellmechanik;

Fig. 8 von der Seite eine abgewandelte Ausführungs-

  form gemäß Fig. 7;

Fig. 9 einen Schnitt durch den Rotorarm gemäß Fig. 8;

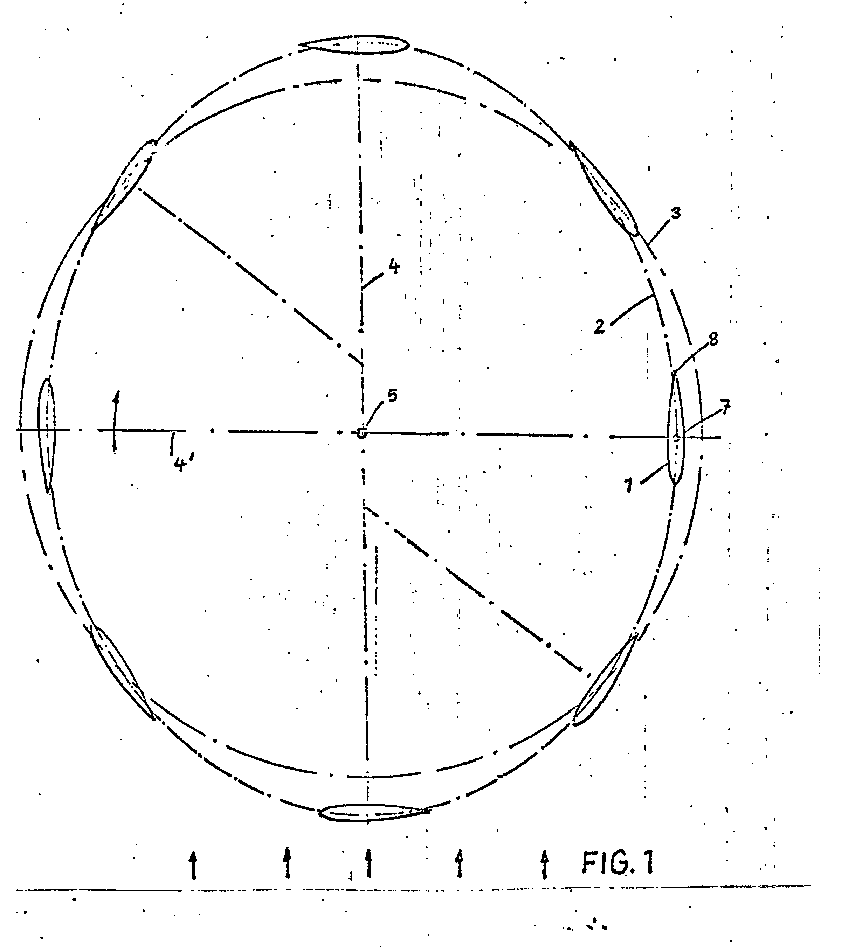

Fig.1o eine bauliche Einzelheit gemäß Fig. 9;

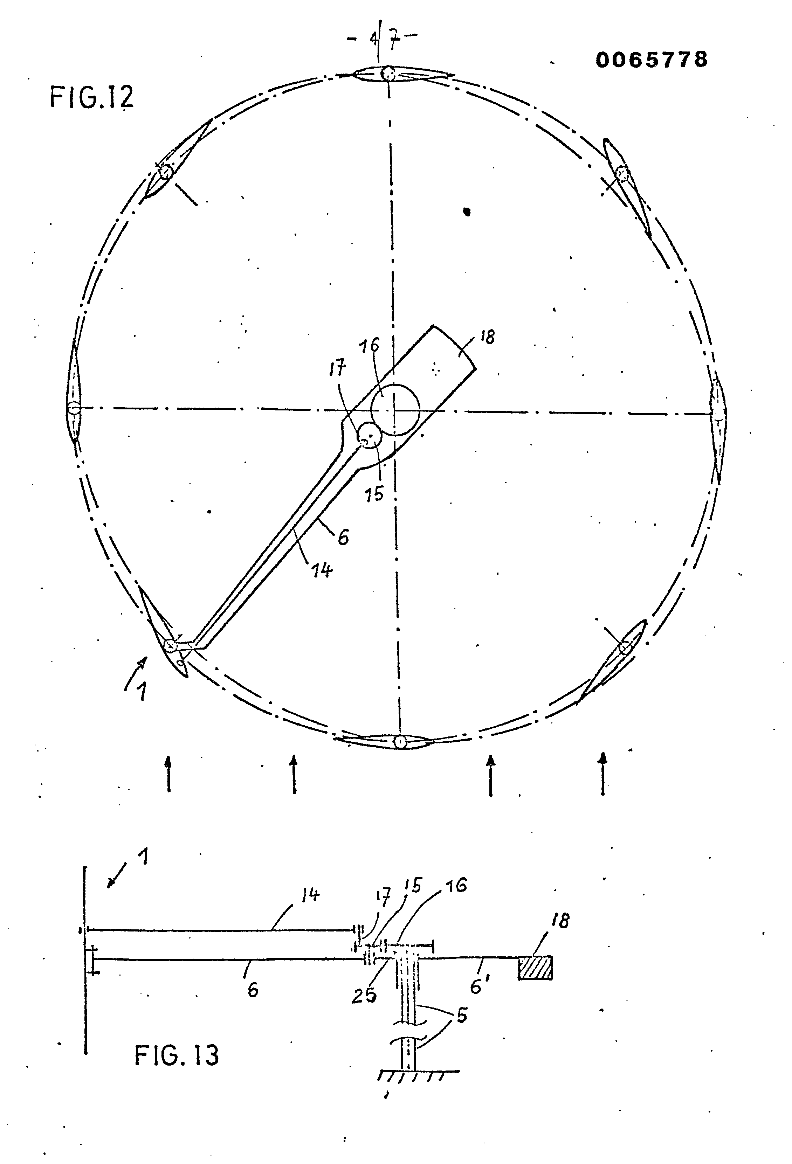

Fig.11 in Draufsicht eine Ausführungsform mit unver-

  änderlichen Rotorarmen und einstellbaren Strö-

  mungsfangblättern;

Fig.12 in Draufsicht eine weitere Ausführungsform der

  Turbine;

Fig.13 von der Seite das Führungs- und Stellgetriebe

  gemäß Fig. 12;

Fig.14
 bis16 in Seitenansicht besondere Ausführungsformen

  der Strömungsfangblätter;

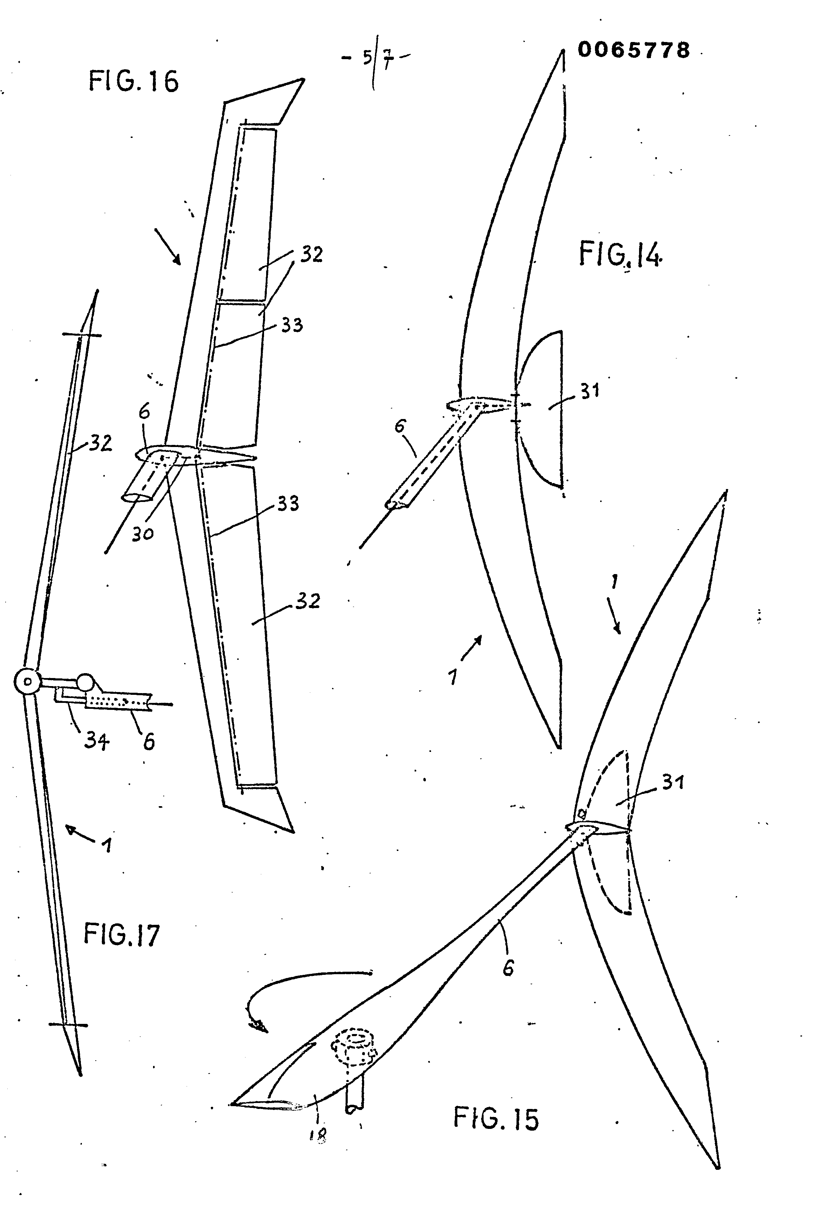

Fig.17 ein Strömungsfangblatt in Ansicht von vorn;

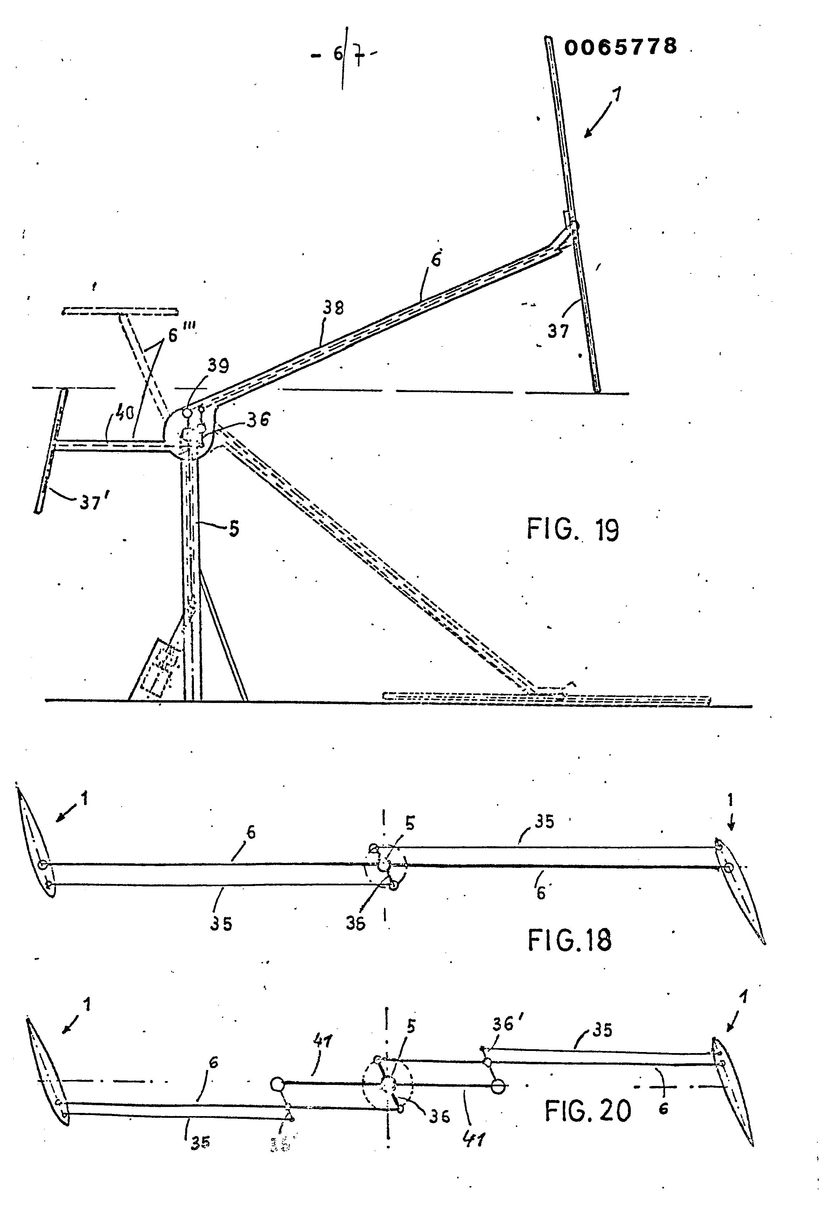

Fig.18 in Draufsicht eine weitere Ausführungsform

  der verstellbaren Fangblätter;

Fig.19 in Seitenansicht eine besondere Ausführungs-

  form der Turbine;

- 8 -

Fig. 2o in Draufsicht eine weitere Ausführungsform

für "pulsierend" angeordnete Rotorarme und

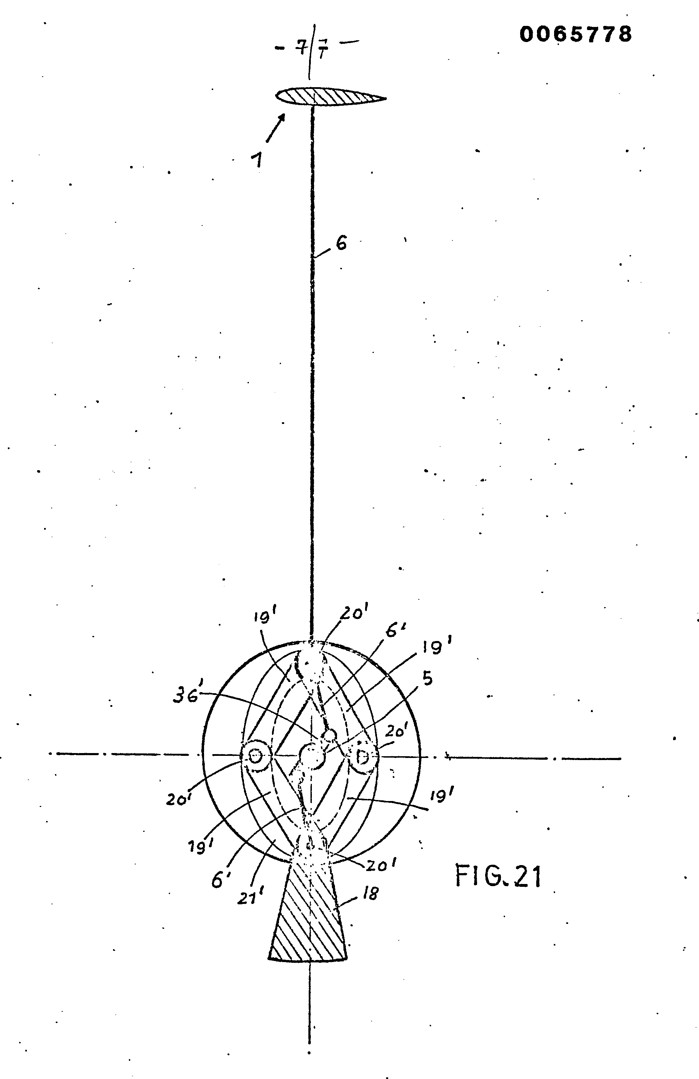

Fig. 21 in Draufsicht eine Ausführungsform eines

Führungsgetriebes für einen pulsierenden

Rotorarm.

- 9 -

In Fig. 1 ist das erfindungsgemäße Prinzip der Turbine
verdeutlicht, wobei erkennbar ist, daß die Strömungsfangblätter 1 eine von der üblichen Kreisbahn 3 abweichende Umlaufbahn 2 durchlaufen, die elliptische bzw.
angenähert elliptische Form hat. Die Anströmrichtung
ist durch die unteren Pfeile angedeutet. Die dargestellte Anzahl der Strömungsfangblätter 1 soll nicht bedeuten, daß die Turbine tatsächlich mit so vielen Blättern
ausgestattet ist, sondern sie deuten nur an, welche
Stellungen ein Strömungsfangblatt während eines Umlaufes einnimmt, wobei auffällt, daß die elliptische Umlaufbahn mit ihrer großen Hauptachse 4 parallel zur Anströmrichtung orientiert ist. Wie erkennbar, stehen die Profile der Strömungsfangblätter 1 in den Stellungen an
den Enden der kleinen Hauptachse 4' parallel zur Anströmrichtung, d.h. sie können in diesen Stellungen
keinerlei bzw. nur eine minimale Bremswirkung ausüben.

Unter Weglassung aller, die Fangblätter 1 tragenden
und einstellenden Teile des Rotors, ist nur der Mast 5
angedeutet, um den sich das Ganze dreht und der im
Schnittpunkt der beiden Hauptachsen 4, 4' angeordnet
ist.

Dieses Grundprinzip, mit den in überraschender Weise
Umlaufgeschwindigkeiten erzielt werden können, die etwa dem 18-2o-fachen der Anströmgeschwindigkeiten
entsprechen, ist, was noch nachfolgend beschrieben wird,
auf verschiedene Art in die Praxis umsetzbar.

Eine Verwirklichungsform ergibt sich nach Fig. 2, wobei an den Rotorarmen 6 die Strömungsfangblätter 1 starr
und bei entsprechender Größe entsprechend verspannt angeordnet sind.

"Starr" soll aber hierbei nur bedeuten, daß die Fangblätter selbst nicht steuerbar sind.
Im Übrigen ist das ganze zentrische Steuerungs- bzw.
Führungsgetriebe im Verhältnis zum Gesamtrotor stark
vergrößert dargestellt.

Der Rotorarm 6 ist an seinen Enden 6' zweifach gelagert und zwar mit seinem inneren Ende 6" an einer um
den fixen Drehpunkt (Mast 5) drehbaren Vertikalachse 9
und mit einem weiteren Drehlager 1o an einer weiteren
Vertikalachse 9' eines um eine um den Mast 5 drehbaren Ritzelscheibe 11 drehbaren Planetenritzels 12,
dessen Durchmesser halb so groß ist wie der der Ritzelscheibe 11, wobei das Planetenritzel 12 an einem am
Mast 5 drehbaren Träger 13 gelagert ist, der bspw. auch
eine Scheibe sein kann.

Fig. 3 unterscheidet sich von Fig. 2 nur insofern,
als hierbei die Strömungsfangblätter 1 zusätzlich
einstellbar sind                         , was
sich sehr einfach bewerkstelligen läßt, wobei natürlich eine solche Überlagerungssteuerung nur für die
Bereiche der Umlaufbahn von Interesse ist, in denen
ggf. weitere Wirkungsgradverbesserungen durch eine
zusätzliche Verstellung erreichbar sind. Vom in diesem
Fall schwenkbar angeordneten Blatt 1 führt hierfür
(bspw. mit untergebracht im hohlen Rotorarm) eine
Stellstange 26 mit Schlitzführung zu einem Stellhebel
27, der seinerseits mit der Vertikalwelle 9' des Planetenritzels 12 in Verbindung steht.

Die Ausführungsformen nach Fig. 5,6 stellen eine andere Möglichkeit der Ellipsenführung vermittels des
Rotorarmes 6 dar, die aber nur für die Ausbildung
der Turbine aus einem Rotorarm mit einem Strömungsfangblatt 1 geeignet ist.

Hierbei ist das mit einem Ausgleichsgewicht 18 versehene Ende 6' des Rotorarmes 6 fest mit einem Doppelrollenträger 19 verbunden, dessen Rollen 2o in
einer Kreuzschlitzführung 21 mit freiem Zentrum 22
geführt sind und die Kreuzschlitzführung 21 drehbar
am Mast 5 angeordnet ist.

Wie aus Fig. 6 erkennbar, ist die Kreuzschlitzführung
in einem mitdrehbaren Gehäuse angeordnet und dieses
mit einer Ausgleichsmasse 24 für die Rollen 2o bzw.
den Rollenträger 19 versehen. Dieses Führungsgetriebe
kommt ohne alle Verzahnungen aus. Solange sich hierbei
eine der Rollen 2o in einer der Nuten der Kreuzschlitzführung befindet, bewegt sich die andere auf gerader
Linie durch den zentrischen Freiraum 22 der Kreuzschlitzführung. Das Gehäuse 23 ist natürlich nach oben für den
Durchgriffs- und Bewegungsbereich der starren Verbindung
zwischen Rotorarm und Doppelrollenträger 19 offen.

Soweit die elliptische Bewegung den Strömungsfangblättern nicht durch die beschriebene Bewegung der Rotorarme 6 selbst vermittelt wird, sind diese verstellbar
gemäß Fig. 11,12 an einem Rotor mit starren Rotorarmen
befestigt, werden aber an diesem so verstellt, daß sich
elliptische bzw. etwa elliptische Umlaufbahnen für die
Fangblätter ergeben.

Gemäß Fig. 7 geschieht dies in der Weise, daß auf einer
am Mast 5 drehbaren Scheibe 26 zwei Abrollelemente 27
angeordnet sind, die von einem Stellring 28 umfaßt
werden, der starr mit Stellstangen 29 verbunden ist.

In Fig. 11 ist dabei im linken unteren Quadranten nur bspw. angedeutet, daß das Fangblatt auch mit nur einer Teilfläche 1' verstellbar sein kann, wobei die Stellstange 29 dann im Inneren des Blattprofiles an einem Stellhebel 3o angelenkt ist. Gemäß Fig. 8,9 kann diese Variante auch dahingehend variiert werden, daß sich eine fliehkraft- bzw. drehzahl-abhängige Verstellung ergibt. Hierbei sind die Abrollelemente 27' kegelstumpfförmig und der Ring 28' mit seiner Innenumfangsfläche entsprechend angepaßt ausgebildet. In den hohlen Rotorarmen 6, die gemäß Fig. 9 ebenfalls strömungsgünstig profiliert sind, verlaufen die Stangen 29 über jeweils eine im Arm gelagerte Druckrolle 3o, die sich bei entsprechend großer Fliehkraft, in ansteigenden Seitenführungsnuten 31 geführt, nach oben drückt und die Stange 29 und damit den Ring 28' anhebt. Dadurch verändert sich die Umlaufhöhe des Ringes 28' zu den konischen Abrollelementen.27'.

Eine weitere Ausführungsform (siehe Fig. 12,13), bei Lauf der Enden der Rotorarme auf einer Kreisbahn und im Falle der Zwangsführung des Strömungsfangblattes 1 bzw. dessen Teilfläche 1' ist eine Stellstange 14 zwischen Blatt (bzw. Teilfläche) und einem Planetenritzel 15 angeordnet, das mit einem zum Rotordrehpunkt zentrischen Ritzel 16 kämmt, wobei die Stellstange 14

- 14 -

an einer am Planetenritzel exzentrisch angeordneten
Vertikalachse 17 angelenkt ist.

In den Fig. 14 - 17 sind nun noch besondere Ausführungs- und Anordnungsformen der Strömungsfangblätter
selbst dargestellt, die zu einer weiteren Optimierung
der Energieumsetzung führen.

Gemäß Fig. 14,15 sind, wie erkennbar, die Strömungsfangblätter schwalbenflügelartig ausgebildet, wobei
diese bzgl. ihrer Spreizstellung ggf. auch über einen
Fliehkraftregler (nicht dargestellt) einstellbar sein
können.

Ferner können die Strömungsfangblätter mit Anlaufhilfsflächen 31 ausgestattet werden, die sich mit Hilfe
von drehzahlabhängigen Hilfsmitteln (bspw. Fliehkraftregler, Staudruckumsetzer od. dgl.) bei entsprechend
hoher Drehzahl des Rotors, selbst in den Fangflügel einziehen.

Bei der Ausführungsform nach Fig. 16 handelt es sich
um einen gepfeilten Flügel mit jeweils mehreren Teilflächen 32.

Im Falle der Pfeilflügelausbildung, aber auch der
Schwalbenschwanzausbildung stehen die äußeren Enden

der Fangblätter aus der Umlaufebene des mittleren Flügelbereiches zwangsläufig heraus.

In diesem Falle werden deshalb die Flügel in sich entweder. entsprechend verwunden oder die Teilflächen. 32
(die natürlich alle gemeinsam an einer Stellwelle 33
sitzen) sind mit unterschiedlicher Winkelstellung an
den Wellen 33 befestigt.

Wie aus Fig. 17 erkennbar, kann das Gesamtfangblatt
auch zwecks Sturmsicherung schwenkbar am Rotorarm 6
befestigt werden, um sich das Blatt bei zu hoher Anströmgeschwindigkeit etwa in die Ebene der Rotorarme 6
einstellen lassen zu können. Die einfachste Möglichkeit besteht dabei darin, daß man den unteren Teil
des Fangblattes länger bzw. schwerer macht als den
oberen Teil, womit zwangsläufig eine Fliehkraftregelung verbunden ist.

Es ist aber auch möglich, zusätzlich eine fliehkraftabhängige Sperre 34 vorzusehen, die bei entsprechend
hoher Drehzahl die Schwenkbewegung des Blattes freigibt.

In den Fig. 18,19 sind noch zwei besonders einfache
Ausführungsformen dargestellt, mit denen das Prinzip
elliptischer bzw. angenähert elliptischer Bahnen verwirklicht werden kann.

Gemäß Fig. 18 ist am zweiarmigen Rotor am Ende jedes
Rotorarmes 6 je ein Strömungsfangblatt 1 einstellbar
angeordnet und jedes Fangblatt 1 über eine Stellstange 35 mit einem zweiarmigen am Rotor gelagerten Stellhebel 36 verbunden ist.

Trotz zentrischer Führung der Rotorarme 6 durchlaufen dabei die Vorder- und Hinterkanten der Fangblätter elliptische Bahnen.

Gemäß Fig. 19 ist das eine Strömungsfangblatt 1 kleiner und als Steuerblatt für das andere größere ausgebildet und derart am Rotor angeordnet, daß es in einer anderen, durchmesserkleineren Umlaufebene läuft,
wobei der, das kleinere Steuerblatt 37' tragende Rotorarm 6"' abströmseitig mit einer, eine Hochstellung
bewirkende Auftriebsfläche 40 versehen sein kann, und
das andere größere am anderen, längeren Rotorarm kippbar gelagerte Fangblatt 37 über einen Seilzug 38 mit
einem am Mast 5 drehbaren und zum Rotor zentrischen
Fixpunkt 39 verbunden ist.

-17-

Bei einfachster Ausführungsform des zentrischen Führungsgetriebes ist dabei gleichzeitig eine Sturmsicherung gegeben (gestrichelte Stellung), da bei entsprechend hoher Umlaufgeschwindigkeit die Auftriebsfläche 4o anspricht und den ganzen Rotor in die gestrichelte Stellung drückt. Die dabei erforderliche
Schwenkung in Horizontallage wird über den Seilzug
38 bewirkt, der im Zentrum am Mast 5 an einem zum
Rotor zentrischen Fixpunkt 39 drehbar befestigt ist.

Wenn man die beschriebenen zentrischen Führungsgetriebe insgesamt in einer kardanischen Aufhängung lagert, besteht auch die Möglichkeit, die Rotorarme
abzusenken, wenn man dafür sorgt, daß die Fangblätter eine zum Boden waagerechte Stellung einnehmen,
was sich ohne weiteres mit ebenfalls fliehkraftabhängigen Stellmitteln erreichen läßt.

Besonders einfache Ausführungsformen, um dem Rotorarm 6 eine pulsierende Bewegung zu vermitteln und
elliptische Durchlaufbahnen zu erreichen, sind in
den Fig. 2o und 21 dargestellt.

Gemäß Fig. 2o erfolgt das in der Weise, daß die Rotorarme 6 mit ihren inneren Enden an einem zum Mast 5

- | ß -

zentrisch drehbaren zweiarmigen Hebel 36 gelagert
sind und selbst einen Stellhebel 36' aufweisen, mit
dem das Fangblatt 1 durch eine Stellstange 35 verbunden ist, wobei der Stellhebel 36' selbst wieder
an einem, um den Mast 5 drehbaren, ebenfalls zweiarmigen Führungshebel 41 angelenkt ist und gemäß
Fig. 21 derart, daß der einzige Rotorarm 6 und sein
Ausgleichsgewicht 18 mit in einer Ellipsenführung
21' geführten Rollen 2o' versehen sind, welche Rollen 21' mit einem Doppelschergestänge 19' untereinander und daß die Stellstangen 6' vom Rotorarm 6
und vom Ausgleichsgewicht 18 mit einem zentrisch
um den Mast 5 drehbaren, zweiarmigen Stellhebel 36'
verbunden sind.

Sofern man die beschriebenen Turbinenausbildungen
zur Umsetzung der Strömungsenergie vom Wasser ausnutzen will, so ist nur für einen geeigneten verankerbaren Schwimmkörper zu sorgen, der dann den
Mast 5 trägt, wobei das Führungsgetriebe mit einer
Strömungsrichtfläche versehen sein muß,

Die Strömungsflächen, die in ihrer Form an die Verhältnisse im Wasser zweckmäßig und entsprechend
angepaßt sind, befinden sich dann im Wasser.

- 19 -

Die Anordnung muß natürlich an Stellen erfolgen, an
denen auch bei Ebbe noch eine ausreichende Wassertiefe vorhanden ist.

Grundsätzlich kann die Steuerung zur Erreichung der
elliptischen Bahnen auch elektronisch erfolgen, wobei die Steuerimpulse bspw. auf geeignete Stellelemente, wie hydraulische oder pneumatische Elemente
gegeben werden.

(14 496)

Erich Herter
Gunnar Herter

Patentansprüche:

1. Turbine, insbesondere Windturbine zur Umsetzung der
   Energie einer frei anströmenden Strömung, bestehend
   aus um eine vertikale Achse drehbaren, sich frei auf
   die Anströmrichtung einstellenden Rotor, an dessen
   äußerem Ende mindestens ein Strömungsfangblatt mit
   schlankem Strömungsprofilquerschnitt angeordnet ist,
   d a d u r c h   g e k e n n z e i c h n e t, daß das
   mindestens eine am Rotor angeordnete Strömungsfangblatt (1) mit dem oder am Rotor derart mittels eines
   Führungsgetriebes geführt ist, daß es eine elliptische bzw. angenähert elliptische Umlaufbahn (2)
   durchläuft.

2. Turbine nach Anspruch 1, d a d u r c h
   g e k e n n z e i c h n e t, daß das Ende des Rotorarmes (6), an dem das Strömungsfangblatt (1) angeordnet ist, bei gleichbleibender Länge des Rotorarmes in Bezug auf den zentralen Drehpunkt (Mast 5)
   des Rotors und für jeweils einen Umlauf variabel
   mittels eines Führungsgetriebes geführt ausgebildet
   ist, wobei die große Hauptachse der Umlaufbahn in

Anströmrichtung orientiert ist.


3. Turbine nach Anspruch 1, d a d u r c h   g e k e n n -
z e i c h n e t, daß am eine Kreisbahn durchlaufenden Ende des Rotorarmes (6) das Strömungsfangblatt
(1) mit seinem Profilschwerpunkt (7) gelagert und
mindestens mit einer Teilfläche in Abhängigkeit von
der Drehzahl derart frei beweglich zwischen zwei jeweils strömungsgünstig auf die jeweilige Anströmrichtung begrenzt oder im gleichen Sinne derart zwangsgeführt gesteuert ausgebildet ist, daß die freie Kante (8) mindestens der beweglichen Teilfläche (1')
beim Umlauf eine elliptische bzw. angenähert elliptische Bahn beschreibt, wobei der Schnittpunkt der
beiden Hauptachsen (4,4') der Umlaufbahn zusammenfallend mit dem fixen Drehpunkt (Mast 5) des Rotors
angeordnet ist.


4. Turbine nach Anspruch 2 oder 3, d a d u r c h
g e k e n n z e i c h n e t, daß das Strömungsfangblatt (1), das mit etwa seiner Längserstreckungsmitte am Rotorarm (6) angeordnet ist, in Bezug auf
die Vertikale und den Rotorarm winklig einstellbar
angelenkt ist. (Fig. 17).

5. Turbine nach einem der Ansprüche 1 bis 4,
   d a d u r c h   g e k e n n z e i c h n e t,   daß
   das Strömungsfangblatt (1) bzw. seine bewegliche
   Teilfläche mindestens zweiteilig ausgebildet ist.
   (Fig. 16).

6. .Turbine nach einem der Ansprüche 1 bis 5,
   d a d u r c h   g e k e n n z e i c h n e t,   daß
   das Strömungsfangblatt (1") in Seitenansicht
   pfeilflügelartig bzw. schwalbenschwanzertig ausgebildet ist (Fig. 14,15,16).

7. Turbine nach Anspruch 6,   d a d u r c h
   g e k e n n z e i c h n e t,   daß das Strömungsfangblatt (1") zu seinen Enden hin verwunden ausgebildet ist.

8. Turbine nach Anspruch 2,   d a d u r c h
   g e k e n n z e i c h n e t,   daß der Rotorarm (6)
   im Bereich seines geführten Endes (6") an einer
   um den fixen Drehpunkt (Mast 5) drehbaren Vertikalachse (9) und mit einem weiteren Drehlager (1o)
   an einer weiteren Vertikalachse (9') eines um eine
   von dem Mast (5) drehbare Ritzelscheibe (11) drehbaren Planetenritzeles (12), dessen Durchmesser halb so groß ist wie der der Ritzelscheibe (11),
wobei das Planetenritzel (12) an einem am Mast
(5) drehbaren Träger (13) gelagert ist (Fig. 2).

9. Turbine nach Anspruch 3, d a d u r c h
g e k e n n z e i c h n e t, daß im Falle der
Zwangsführung des Strömungsfangblattes (1) bzw.
dessen Teilfläche (1') eine Stellstange (14) zwischen Blatt (bzw. Teilfläche) und einem Planetenritzel (15) angeordnet ist, das mit einem zum
Rotordrehpunkt zentrischen Ritzel (16) kämmt, wobei die Stellstange (14) an einer am Planetenritzel exzentrisch angeordneten Vertikalachse (17)
angelenkt ist (Fig. 12,13).

lo. Turbine nach Anspruch 1 und 2, d a d u r c h
g e k e n n z e i c h n e t, daß das mit einem
Ausgleichsgewicht (18) versehene Ende (6')des
einzigen Rotorarmes (6) fest mit einem Doppelrollenträger (19) verbunden ist, dessen Rollen (2o)
in einer Kreuzschlitzführung (21) mit freiem Zentrum (22) geführt sind, und die Kreuzschlitzführung (21) drehbar am Mast (5) angeordnet ist.
Fig. 5,6).

- 5 -

11. Turbine nach Anspruch 1o, d a d u r c h
g e k e n n z e i c h n e t, daß die Kreuzschlitzführung (21) in einem mitdrehbaren Gehäuse (23)
angeordnet und diese mit einer Ausgleichsmasse
(24) für die Rollen (2o) bzw. den Rollenträger (19)
versehen ist.

12. Turbine nach jedem der Ansprüche 1 bis 11,
d a d u r c h  g e k e n n z e i c h n e t, daß
das Führungsgetriebe für den Rotorarm (6) bzw.
die Strömungsfangblattverstellung mit einem Doppelanschlag (25) versehen ist, der eine Schwenkverstellung des Führungsgetriebes um etwa 18o$^{\circ}$ zuläßt und mit dem Mast (5) in Wirkverbindung steht.

13. Turbine nach Anspruch 1, d a d u r c h
g e k e n n z e i c h n e t, daß bei schwenkbarer Anordnung der Strömungsfangblätter (1) an den
eine Kreisbahn durchlaufende Enden der Rotorarme
(6) diese bzw. deren Teilfläche (1') über Stellstangen (29) mit einem Stellring (28) starr verbunden sind, der auf einer drehbaren Scheibe (26)
(bzw. Träger) zwei Abrollelemente (27) umgreift,
die auf der Scheibe (26) angeordnet sind.

14. Turbine nach Anspruch 13, d a d u r c h
g e k e n n z e i c h n e t, daß die Abrollelemente (27) und der Stellring (28) mit konischen
Laufflächen (35) versehen sind.

15. Turbine nach Anspruch 14, d a d u r c h
g e k e n n z e i c h n e t, daß die Stellstange
(29) im Innenraum des Rotorarmes (6) über eine
fliehkraftabhängig in Führungen (31) gelagerte
und verstellbare Rolle (3o) verstellbar ausgebildet ist.

16. Turbine nach Anspruch 2, d a d u r c h
g e k e n n z e i c h n e t, daß am zweiarmigen
Rotor am Ende jedes Rotorarmes (6) je ein Strömungsfangblatt (1) einstellbar angeordnet ist
und jedes Fangblatt (1) über eine Stellstange (35)
mit einem zweiarmigen am Rotor gelagerten Stellhebel (36) verbunden ist.

17. Turbine nach Anspruch 16, d a d u r c h
g e k e n n z e i c h n e t, daß das eine Strömungsfangblatt (1) kleiner und als Steuerblatt
für das andere größere ausgebildet und derart
am Rotor angeordnet ist, daß es in einer anderen druchmesserkleineren Umlaufebene läuft.

18. Turbine nach Anspruch 17, d a d u r c h
    g e k e n n z e i c h n e t, daß der, das kleine-
    re Steuerblatt (37') tragende Rotorarm (6"') abströmseitig mit einer, eine Hochstellung bewirkende Auftriebsfläche (40) versehen ist und das andere größere am anderen längeren Rotorarm kippbar
    gelagerte Fangblatt (37) über einen Seilzug (38)
    mit einem am Mast (5) drehbaren und zum Rotor zentrischen Fixpunkt (39) verbunden ist.

19. Turbine nach Anspruch 1 und/oder 2,
    d a d u r c h  g e k e n n z e i c h n e t, daß
    die Rotorarme (6) mit ihren inneren Enden an einem
    zum Mast (5) zentrisch drehbaren zweiarmigen Hebel
    (36) gelagert sind und selbst einen Stellhebel (36')
    aufweisen, mit dem das Fangblatt (1) durch eine
    Stellstange (35) verbunden ist, wobei der Stellhebel (36') selbst wieder an einem, um den Mast (5)
    drehbaren, ebenfalls zweiarmigen Führungshebel (41)
    angelenkt ist. (Fig. 2o).

20. Turbine nach Anspruch 1 und/oder 2,

d a d u r c h   g e k e n n z e i c h n e t, daß

der einzige Rotorarm (6) und sein Ausgleichsgewicht

(18) mit in einer Ellipsenführung (21') geführten

Rollen (2o') versehen sind, welche Rollen (21') mit einem Doppelschergestänge (19') untereinander und daß die Stellstangen (6') vom Rotorarm (6 ) und vom Ausgleichsgewicht (18) mit einem zentrisch um den Mast (5) drehbaren, zweiarmigen Stellhebel (36')

verbunden sind.

FIG. 1

0065778

0065778

FIG.3

FIG.4

FIG.5

FIG.6

FIG. 7

FIG. 8

FIG. 9

FIG. 10

FIG. 11

FIG.12

18

16

17

15

6

14

1

FIG. 13

1

14

17  15  16

18

6

25

6'

5

0065778

FIG.16

32

33

6

30

33

32

34    6

1

FIG.17

FIG.14

31

6

1

7

1

31

6

18

FIG.15

0065778

FIG. 19

FIG.18

FIG. 20

FIG.21